# EUROPÄISCHE PATENTANMELDUNG

(11) **EP 1 160 674 A2**
(43) Veröffentlichungstag der Anmeldung: **05.12.2001**
(21) Anmeldenummer: 01110457.7
(22) Anmeldetag: 27.04.2001
(51) Int. Cl.: G06F 13/16

(54) **Datenverarbeitungsanordnung mit einem Systembus, einem Speicherinterface, einem Speicherbus und einem Speicher, sowie ein Verfahren zu ihrem Betrieb**

(30) Priorität: 31.05.2000 DE 10027205
(71) Anmelder: Fujitsu Siemens Computers GmbH, 81739 München (DE)
(72) Erfinder: Demharter, Nikolaus, 91077 Dormitz (DE)
(74) Vertreter: Epping Hermann & Fischer

(57) **Zusammenfassung**

Die vorliegende Erfindung betrifft eine Datenverarbeitungsanordnung mit einem Systembus (1) der mittels eines Speicherinterface (3) mit einem Speicherbus (4) verbunden ist. Ein Speicher (5) ist an den Speicherbus (4) angeschlossen. Das Speicherinterface (3) umfaßt dabei einen Speicherdatenpfad (6), einen Speicherkommandogenerator (7), eine Speicherinterfacekontrolleinheit (8) und einen Adreßgenerator (9), der mit einer Adreßleitung des Systembusses (1) verbunden ist. Der Adreßgenerator (9) dient dazu, spekulative Adressen zu erzeugen und an den Speicherbus (4) zu übertragen, so daß bereits spekulativ Daten zu den spekulativen Adressen aus dem Speicher (5) gelesen werden. Bei einem nachfolgenden Lesezugriff auf eine gültige Adresse stehen die spekulativ aus dem Speicher (5) gelesenen Daten ohne weitere Zeitverzögerung bereit und können sofort an den Systembus (1) übertragen werden, falls die spekulative zweite Adresse mit der gültigen übereinstimmt.

## Beschreibung

Die vorliegende Erfindung betrifft eine Datenverarbeitungsanordnung mit einem Systembus, der über ein Speicherinterface mit einem Speicherbus verbunden ist, an dem ein Speicher angeschlossen ist, sowie ein Verfahren zu ihrem Betrieb.

Datenverarbeitungsanordnungen weisen üblicherweise einen Systembus auf, an dem z.B. ein Prozessor, eine Bridge als Schnittstelle zu weiteren Bussystemen und Peripheriegeräten, sowie ein Speicherinterface angeschlossen sind. Das Speicherinterface verbindet beispielsweise den Systembus mit einem Speicherbus, an dem ein Speicher angeschlossen ist. Es existiert eine Vielzahl von Busprotokollen zum Betrieb eines Systembusses und eines Speicherbusses. Beispielsweise ist es bekannt, einen Lesezugriff auf den Speicher durch Anlegen einer ersten auszulesenden Adresse an die Adreßleitungen des Systembusses mit einem Lesesignal auf dem Systembus zu starten. Das Bussystem wird dabei mit einer Taktrate betrieben. Üblicherweise ist die Taktrate auf dem Systembus wesentlich höher, als die Bearbeitungsgeschwindigkeit in dem Speicher. Daher dauert es auf dem Systembus meist einige Takte, bis die ersten Daten zu der ersten Adresse an den Systembus übertragen worden sind. Ein Busprotokoll sieht dabei vor, daß die erste Adresse bis zum Abschluß der Leseoperation und damit dem Anliegen der ersten Daten auf dem Systembus präsent bleibt. Während dieser Zeit ist der Systembus durch die Leseoperation blockiert.

Dies führt zu einer Wartezeit auf dem Systembus, die für die Datenverarbeitungsanordnung nutzlos verstreicht. Es existieren Busprotokolle, die diese Wartezeit nutzen. Eine Variante, die Wartezeit zu nutzen, wird von sog. Pipelined-Bussystemen verwendet. Ein einstufiger Pipelined-Bus legt zunächst die erste Adresse und ein Lesesignal an dem Bus an. Dadurch wird die Adresse von dem Speicher übernommen und ein erster Lesevorgang für die ersten Daten gestartet. Anstatt zu warten, wird nun bereits die zweite Adresse für die zweiten Daten an den Systembus angelegt. Werden nun die ersten Daten vom dem Speicher an den Systembus übermittelt, so liegt bereits die zweite Adresse an dem Systembus an und wird zum gleichen Zeitpunkt wie die Daten, aber in umgekehrter Richtung wie die Daten, von dem Systembus zu dem Speicher übertragen. Der Übertragungsvorgang wird durch Anlegen eines zweiten Lesesignals gestartet. Durch diese Verschachtelung bzw. Pipeline bei Systembuszugriffen kann die Übertragungsgeschwindigkeit des Systembus erhöht werden, da die Wartezeit genutzt wird.

Dauert ein Zugriff auf eine an dem Systembus angeschlossene Komponente länger als zwei Takte, so kann die Systembuspipeline nicht nur einstufig, sondern mehrstufig ausgebildet werden. Dabei werden auf dem Systembus noch weitere Operationen zwischen dem Anlegen einer Adresse und der Lieferung der zugehörigen Daten ausgeführt.

Ist allerdings die Tiefe der Pipeline aus technischen bzw. aus Busprotokollgründen beschränkt, die in einer Spezifikation eine tiefere Pipeline ausschließen, so tritt auf dem Systembus ungenutzte Wartezeit auf, die die Datenverarbeitungsanordnung verlangsamt.

Es ist die Aufgabe der Erfindung, eine Schaltung und ein Verfahren zu ihrem Betrieb anzugeben, das die Datenraten auf einem Systembus einer Datenverarbeitungsanordnung unter Beibehaltung der Taktrate erhöht.

Erfindungsgemäß wird die Aufgabe gelöst durch eine Datenverarbeitungsanordnung mit:
- einem Systembus, der mit einem Prozessor verbunden ist;
- einem Speicherinterface, das einen Speicherbus mit dem Systembus verbindet;
- einem Speicher, der mit dem Speicherbus verbunden ist;
- wobei das Speicherinterface einen Speicherdatenpfad, einen Speicherkommandogenerator aufweist und eine Speicherinterfacekontrolleinheit umfaßt;
- wobei das Speicherinterface einen Adreßgenerator umfaßt, der mit einer Adreßleitung des Systembusses verbunden ist.

Der Adreßgenerator ist dazu geeignet, bei aufeinanderfolgenden Lesezyklen, deren Adresse gewissen Regeln entspricht, spekulative Adressen zu generieren, die wahrscheinlich auf die am Systembus anliegende Adresse folgen werden. Mit Hilfe der spekulativ generierten Adressen werden weitere Lesezugriffe auf den Speicher gestartet, während vorhergehende Lesevorgänge bearbeitet werden. Dadurch stehen bereits an dem Ausgang des Speichers zu spekulativ generierten Adressen ausgelesene Daten bereit, die bei nachfolgenden Lesevorgängen mit einer entsprechenden Adresse ohne weitere Wartezyklen direkt von dem Speicher an den Systembus übertragen werden können, wenn die spekulative Adresse mit der tatsächlichen Adresse übereinstimmt.

Eine vorteilhafte Ausgestaltung der erfindungsgemäßen Anordnung sieht vor, daß ein Ausgang des Adreßgenerators mit einer Adreßleitung des Speicherbusses verbunden ist. Dadurch können die vom Adreßgenerator erzeugten spekulativen Adressen direkt an die Adreßleitungen des Speicherbusses übertragen werden.

Eine weitere erfindungsgemäße Anordnung sieht vor, daß das Speicherinterface einen Zwischenspeicher zur Speicherung von Adressen aufweist, wobei ein Eingang des Zwischenspeichers mit dem Ausgang des Adreßgenerators verbunden ist. Durch diese Anordnung ist es in vorteilhafter Weise möglich, die vom Adreßgenerator erzeugten spekulativen Adressen zwischen zu speichern, so daß sie für einen nachfolgenden Vergleich mit tatsächlich an dem Systembus anliegenden Adressen bereit stehen.

Weiterhin ist vorgesehen, daß das Speicherinterface einen Komparator aufweist, wobei ein erster Eingang des Komparators mit einer Adreßleitung des Systembusses und ein zweiter Eingang des Komparators mit dem Zwischenspeicher verbunden ist und ein Ausgang des Komparators mit einem Eingang der Speicherinterfacekontrolle verbunden ist. Durch den Komparator ist es in vorteilhafter Weise möglich, die vom Adreßgenerator generierten und im Zwischenspeicher gespeicherten spekulativen Adressen mit einer tatsächlich am Systembus anliegenden Adresse zu vergleichen. Das Ergebnis dieses Vergleichs wird an die Speicherinterfacekontrolle übertragen. Ist z.B. die spekulative Adresse mit der am Systembus anliegenden Adresse identisch, so werden die spekulativ aus dem Speicher ausgelesenen Daten für gültig erklärt und an den Systembus übertragen.

Eine weitere Ausgestaltung der erfindungsgemäßen Schaltungsanordnung sieht vor, daß ein Ausgang der Speicherinterfacekontrolle mit einem Steuereingang des Adreßgenerators verbunden ist. Durch diese Verbindung kann die Speicherinterfacekontrolle den Adreßgenerator steuern und in vorteilhafter Weise mitteilen, falls eine spekulative Adresse nicht mit einer am Systembus anliegenden Adresse übereinstimmt, so daß der Adreßgenerator in diesem Fall die tatsächlich am Systembus anliegende Adresse an den Speicher überträgt.

Bezüglich des Verfahrens wird die gestellte Aufgabe gelöst durch ein Verfahren zum Betrieb einer der vorgenannten Datenverarbeitungsanordnungen mit den Schritten:
- Anlegen einer ersten Adresse an einen Systembus;
- Übertragen der ersten Adresse an einen Speicherbus;
- Erzeugen eines ersten Lesesignals in einem Speicherinterface, das mit dem Systembus und dem Speicherbus verbunden ist;
- Übertragen des ersten Lesesignals an den Speicherbus;
- Übertragen von ersten Daten von dem Speicherbus über einen Speicherdatenpfad an den Systembus,
- wobei nach dem Übertragen des ersten Lesesignals und vor dem Übertragen der ersten Daten in einem Adreßgenerator, der in dem Speicherinterface angeordnet ist, eine spekulative zweite Adresse generiert wird.

Das erfindungsgemäße Verfahren generiert in dem Adreßgenerator, der in dem Speicherinterface angeordnet ist, eine spekulative zweite Adresse. Die spekulative zweite Adresse kann in vorteilhafter Weise dazu verwendet werden, einen weiteren Lesevorgang mit der zweiten spekulativen Adresse in dem Speicher durchzuführen, um so bereits zweite, spekulative Daten für eine evtl. nachfolgende zweite gültige Adresse auf dem Systembus bereit zu halten.

Ein Verfahrensschritt sieht vor, daß die spekulative zweite Adresse an den Speicherbus übertragen wird. Das Übertragen der zweiten spekulativen Adresse an den Speicherbus ermöglicht es, die zweiten Daten bereits spekulativ aus dem Speicher zu lesen, so daß die spekulativ gelesenen Daten - im Falle einer gültigen zweiten Adresse auf dem Systembus - für gültig erklärt werden und an den Systembus übertragen werden können.

Ein weiterer Verfahrensschritt sieht vor, daß die spekulative zweite Adresse in einem Zwischenspeicher gespeichert wird. Durch das Zwischenspeichern der zweiten spekulativen Adresse steht diese zu einem späteren Zeitpunkt bereit, so daß sie z.B. mit einer auf dem Systembus anliegenden Adresse verglichen werden kann um beispielsweise spekulativ aus dem Speicher gelesene Daten für gültig zu erklären.

Ein weiterer vorteilhafter Verfahrensschritt sieht vor, daß die an der spekulativen zweiten Adresse im Speicher gespeicherten zweiten Daten von dem Speicher an den Speicherbus übertragen werden. Durch das Übertragen der zweiten Daten aus dem Speicher an den Speicherbus stehen die zweiten Daten für eine Übertragung an den Systembus bereit. Werden die zweiten Daten durch einen Adreßvergleich für gültig erklärt, so werden sie an den Systembus übertragen.

Darüber hinaus sieht ein Verfahrensschritt vor, daß eine gültige zweite Adresse an dem Systembus anliegt und mit der spekulativen zweiten Adresse mittels eines Komparators verglichen wird. Der Vergleich der spekulativen zweiten Adresse mit der gültigen zweiten Adresse ermöglicht es, im Falle einer Übereinstimmung der Adressen, die zweiten spekulativ gelesenen Daten für gültig zu erklären und an den Systembus zu übertragen.

Eine weitere vorteilhafte Ausgestaltung des erfindungsgemäßen Verfahrens sieht vor, daß die zweiten Daten von dem Speicherbus an den Systembus übertragen werden, falls die spekulative zweite Adresse mit der gültigen zweiten Adresse übereinstimmt. In diesem Fall kann in vorteilhafter Weise auf einen längeren Lesevorgang von dem Speicher verzichtet werden, da die Daten bereits spekulativ von dem Speicher bereitgestellt worden sind und direkt an den Systembus übertragen werden können.

Weitere vorteilhafte Ausgestaltungen sind Gegenstand der jeweiligen Unteransprüche.

Nachfolgend wird die Erfindung anhand von Figuren und eines Ausführungsbeispiels näher erläutert.

In den Figuren zeigen:
- Figur 1: eine Datenverarbeitungsanordnung mit einem Systembus, einem Speicherinterface, einem Speicherbus und einem Speicher;
- Figur 2: ein Timing-Diagramm.

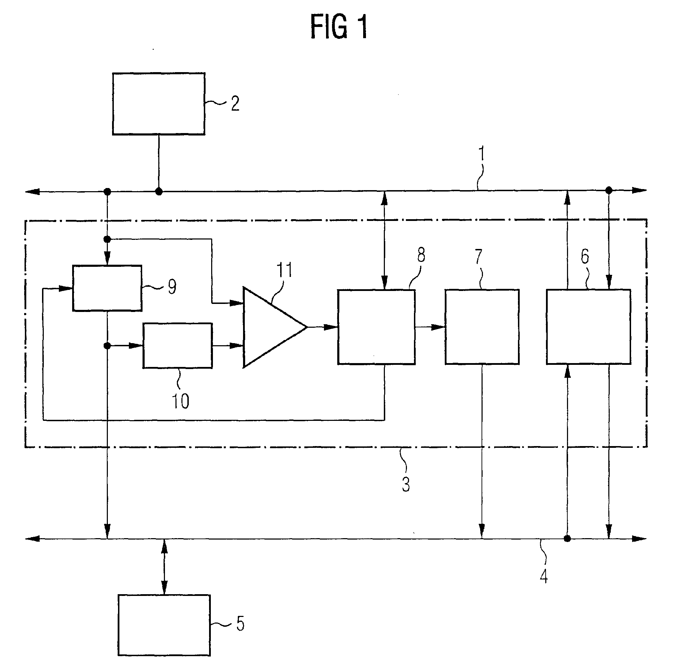

In Figur 1 ist eine Datenverarbeitungsanordnung dargestellt An einen Systembus 1 ist eine Systembuskontrolleinheit 2 angeschlossen. Bei der Systembuseinheit 2 kann es sich beispielsweise um einen Prozessor oder um einen Controller handeln, die den Systembus beispielsweise als Master kontrollie ren. Weiterhin ist an den Systembus 1 ein Speicherinterface angeschlossen, welches den Systembus 1 mit einem Speicherbus 4 verbindet. Das Speicherinterface 3 umfaßt einen Speicherdatenpfad 6, der zum Transport von Daten von dem Speicherbus 4 zu dem Systembus 1 bzw. von dem Systembus 1 zu der Speicherbus 4 geeignet ist. Weiterhin umfaßt das Speicherinterface 3 einen Speicherkommandogenerator 7, der dazu geeignet ist Kommandos an den Speicherbus 4 zu senden, die beispielsweise einen Speicher 5 steuern, der an dem Speicherbus 4 angeschlossen ist. Weiterhin umfaßt das Speicherinterface 3 eine Speicherinterfacekontrolleinheit 8, die an den Systembus 1 angeschlossen ist und den Speicherkommandogenerator 7 kontrolliert. Darüber hinaus ist ein Adreßgenerator 9 vorgesehen, der mit einer Adreßleitung des Systembusses 1 verbunden ist. Ein Ausgang des Adreßgenerators 9 ist sowohl mit dem Speicherbus 4 als auch mit einem Zwischenspeicher 1( verbunden. Der Zwischenspeicher 10 ist dazu geeignet, vom Adreßgenerator 9 generierte Adressen zwischen zu speichern. Ein Ausgang des Zwischenspeichers 10 ist mit einem Eingang eines Komparators 11 verbunden. Ein zweiter Eingang des Komparators 11 ist mit einer Adreßleitung des Systembusses 1 verbunden. Der Komparator 11 ist dazu geeignet, eine in dem Zwischenspeicher 10 gespeicherte Adresse mit einer auf dem Systembus 1 anliegenden Adresse zu vergleichen und von einen Komparatorausgang ein Ausgangssignal an die Speicherinterfacekontrolleinheit 8 zu übermitteln.

Beispielsweise kann es sich bei dem Systembus 1 um den AHB-Bus der Firma ARM handeln, der in dem Dokument AMBA-0001-CUST-ESPC-A03 beschrieben ist. Bei dem Speicher 5 kann es sich beispielsweise um SDRAM-Speicherbausteine handeln. SDRAM-Speicherbausteine sind Synchronous Dynamic Random Access Memory-Bausteine.

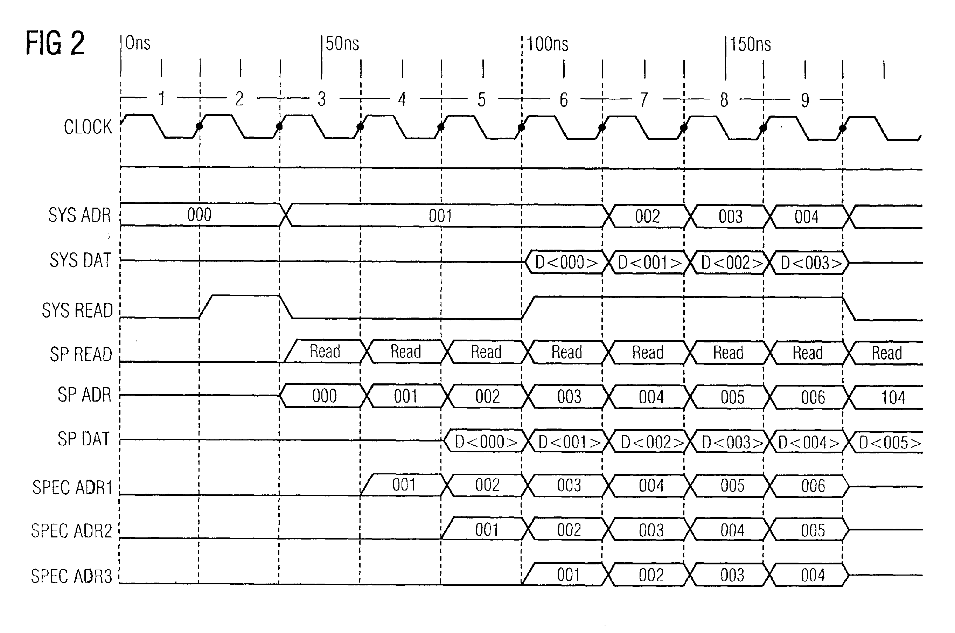

Figur 2 ein Timingdiagramm das die zeitliche Abfolge von Signalen beim Betrieb der in Figur 1 dargestellten Schaltungsanordnung angibt.

In Figur 2 ist ein Timingdiagramm zum Betrieb der in Figur 1 dargestellten Schaltungsanordnung dargestellt. In der obersten Zeile des Timingdiagramms ist das Signal CLOCK als Taktsignal dargestellt. Darüber ist die Nummer des jeweiligen Taktes angegeben. Weiter darüber ist eine mögliche Zeitabfolge in Nanosekunden (ns) angegeben, wobei ein Takt hier eine Dauer von 20 ns aufweist. Beim Betrieb der in Figur 1 dargestellten Schaltungsanordnung startet die Betrachtung der Figur 2 in Takt 2.

In Takt 2 ist eine erste Adresse 000 an den Adreßleitungen des Systembusses 1 von der Systembuskontrolleinheit 2 angelegt worden. Zusätzlich wird durch das Anlegen des Signals SYSREAD ein Lesezyklus von der Systembuskontrolleinheit 2 eingeleitet.

In Takt 3 wird ein Lesesignal SPREAD auf den Speicherbus übertragen und die Adresse 000 an die Adreßleitungen des Speicherbusses 4 übertragen.

In dem Takt 4 wird von dem Adreßgenerator 9 eine spekulative erste Adresse 001 erzeugt, die an die Adreßleitungen SPADR des Speicherbusses 4 übertragen wird und mit dem Signal SPREAD ein weiterer Lesezyklus auf dem Speicher gestartet wird. Zusätzlich wird die erste spekulative Adresse 001 in einem ersten Adreßregister für die Speicherung der spekulativen Adresse SPECADR1 zwischengespeichert. Das erste Zwischenspeicherungsadreßregister ist in dem Zwischenspeicher 10 angeordnet.

In den Takt 5 auf dem Systembus 1 wird von dem Adreßgenerator 9 eine zweite spekulative Adresse 002 generiert und an den Speicherbus SPADR übertragen, so daß mit dem Signal SPREAD ein weiterer Lesezugriff auf den Speicher 5 statt findet. Weiterhin wird die erste spekulative Adresse in das zweite spekulative Adreßregister SPECADR2 verschoben und in dem ersten spekulativen Adreßregister SPECADR1 die zweite spekulative Adresse 002 zwischengespeichert. Das zweite spekulative Adreßregister SPECADR2 ist ebenfalls in dem Zwischenspeicher 10 angeordnet. Darüber hinaus liegen die ersten gelesenen Daten an den Datenleitungen SPDAT des Speicherbusses 4 an.

In Takt 6 werden die ersten Daten an die Datenleitungen SYSDAT des Systembusses 1 übertragen. Darüber hinaus liegt eine zweite Adresse 001 an den Adreßleitungen SYSADR des Systembusses 1 an. Mit dem Kommando SYSREAD wird eine Lesevorgang auf der Adresse 001 gestartet. Weiterhin wird von dem Adreßgenerator 9 eine dritte spekulative Adresse 003 generiert, an den Speicherbus SPADR übertragen, ein weiterer Lesevorgang mit dem Signal SPREAD gestartet und in dem spekulativen Adreßregister SPECADR1 zwischen gespeichert. Entsprechend werden die Daten aus dem ersten spekulativen Adreßregister SPECADR1 in das zweite spekulative Adreßregister SPECADR2 und die Daten des zweiten spekulativen Adreßregisters an das dritte spekulative Adreßregister SPECADR3 weiter geschoben. Damit ist in dem dritten spekulativen Adreßregister die erste spekulative Adresse gespeichert, in dem zweiten spekulativen Adreßregister die zweite spekulative Adresse und in dem ersten spekulativen Adreßregister die dritte spekulative Adresse. Da in dem Systemtakt 6 Daten von der Adresse 001 gelesen werden sollen, wird die Adresse 001 mit dem Inhalt des dritten spekulativen Adreßregisters SPECADR3 verglichen.

Stimmen die beiden Adressen überein, werden die ersten spekulativ gelesenen Daten D001 in dem Takt 7 an die Datenleitung SYSDAT des Systembusses 1 übertragen.

Die Adresse an dem Systembus 1 wird von der Systembuskontrolleinheit 2 auf den Leitungen SYSADR bereitgestellt. Ebenso generiert die Systembuskontrolleinheit 2 das Lesesignal SYSREAD. Die Datenübertragung von dem Speicherbus 4 wird von dem Datenpfad 6 durchgeführt, der Daten von den Datenleitungen SPDAT des Speicherbusses an die Datenleitungen SYSDAT des Systembusses überträgt. Das Lesesignal SPREAD auf dem Speicherbus 4 wird von dem Speicherkommandogenerator 7 erzeugt. Der Adreßgenerator 9 generiert die erste, zweite und dritte spekulative Adresse, die in den ersten, zweiten und dritten spekulativen Adreßregistern zwischengespeichert werden, die in dem Zwischenspeicher 10 angeordnet sind. Der Vergleich der ersten spekulativen Adresse mit einer an dem Systembus anliegenden Adresse wird in dem Komparator 11 durchgeführt und deren Ergebnis an die Speicherinterfacekontrolleinheit 8 übermittelt. Die Speicherinterfacekontrolleinheit 8 kann die spekulativ gelesenen Daten für gültig erklären so daß diese in einem nachfolgenden Systemtakt von dem Speicherbus 4 auf den Systembus 1 übertragen werden können. Ebenso kann die Speicherinterfacekontrolleinheit die spekulativ gelesenen Daten für ungültig erklären, so daß der Adreßgenerator eine neue Adresse generieren kann.

### Bezugszeichenliste

- 1: Systembus
- 2: Systembuskontrolleinheit
- 3: Speicherinterface
- 4: Speicherbus
- 5: Speicher
- 6: Speicherdatenpfad
- 7: Speicherkommandogenerator
- 8: Speicherinterfacekontrolleinheit
- 9: Adreßgenerator
- 10: Zwischenspeicher
- 11: Komparator
- CLOCK: Taktsignal
- SYSADR: Systembusadresse
- SYSDAT: Systembusdaten
- SYSREAD: Systembuslesesignal
- SPREAD: Speicherlesesignal
- SPADR: Speicheradresse
- SPDAT: Speicherdaten
- SPECADR1: erstes Zwischenspeicherregister
- SPECADR2: zweites Zwischenspeicherregister
- SPECADR3: drittes Zwischenspeicherregister

## Patentansprüche

1. Datenverarbeitungsanordnung mit einem Systembus (1),
- der mit einer Systembuskontrolleinheit (2) verbunden ist;
- einem Speicherinterface (3), das einen Speicherbus (4) mit dem Systembus (1) verbindet;
- einem Speicher (5), der mit dem Speicherbus (4) verbunden ist;
- wobei das Speicherinterface (3) einen Speicherdatenpfad (6), einen Speicherkommandogenerator (7) und eine Speicherinterfacekontrolleinheit (8) umfaßt,
**dadurch gekennzeichnet, daß**
das Speicherinterface (3) einen Adreßgenerator (9) umfaßt, der mit einer Adreßleitung des Systembusses (1) verbunden ist.

2. Anordnung nach Anspruch 1,
**dadurch gekennzeichnet, daß**
ein Ausgang des Adreßgenerators (9) mit einer Adreßleitung des Speicherbusses (4) verbunden ist.

3. Anordnung nach einem der Ansprüche 1 oder 2,
**dadurch gekennzeichnet, daß**
das Speicherinterface einen Zwischenspeicher (10) zur Speicherung von Adressen aufweist, wobei ein Eingang des Zwischenspeichers (10) mit einem Ausgang des Adreßgenerators (9) verbunden ist.

4. Anordnung nach einem der Ansprüche 1-3,
**dadurch gekennzeichnet, daß**
das Speicherinterface (3) einen Komparator (11) aufweist, wobei ein erster Eingang des Komparators (11) mit einer Adreßleitung des Systembusses (1) und ein zweiter Eingang des Komparators (11) mit dem Zwischenspeicher (10) verbunden ist und ein Ausgang des Komparators (11) mit einem Eingang der Speicherinterfacekontrolleinheit (8) verbunden ist.

5. Anordnung nach einem der Ansprüche 1 bis 4,
**dadurch gekennzeichnet, daß**
ein Ausgang der Speicherinterfacekontrolleinheit (8) mit einem Steuereingang des Adreßgenerators (9) verbunden ist.

6. Verfahren zum Betrieb einer der vorgenannten Datenverarbeitungsanordnungen mit den Schritten:
- Anlegen einer ersten Adresse an einen Systembus (1);
- Übertragung der ersten Adresse an einen Speicherbus (4) ;
- Erzeugen eines ersten Lesesignals in einem Speicherinterface (3), das mit dem Systembus (1) und dem Speicherbus (4) verbunden ist;
- Übertragen des ersten Lesesignals an den Speicherbus (4);
- Übertragen von ersten Daten von dem Speicherbus (4) über einen Speicherdatenpfad (6) an den Systembus (1)
**dadurch gekennzeichnet, daß**
nach dem Übertragen des ersten Lesesignals und vor dem Übertragen der ersten Daten in einem Adreßgenerator (9), der in dem Speicherinterface (3) angeordnet ist, eine spekulative zweite Adresse generiert wird.

7. Verfahren nach Anspruch 6,
**dadurch gekennzeichnet, daß**
die spekulative zweite Adresse an den Speicherbus (4) übertragen wird.

8. Verfahren nach einem der Ansprüche 6 oder 7,
**dadurch gekennzeichnet, daß**
die spekulative zweite Adresse in einem Zwischenspeicher (10) gespeichert wird.

9. Verfahren nach einem der Ansprüche 6 bis 8,
**dadurch gekennzeichnet, daß**
die an der spekulativen zweiten Adresse im Speicher (5) gespeicherten zweiten Daten von dem Speicher (5) an den Speicherbus (4) übertragen werden.

10. Verfahren nach einem der Ansprüche 6 bis 9,
**dadurch gekennzeichnet, daß**
eine gültige zweite Adresse an dem Systembus (1) anliegt und mit der spekulativen zweiten Adresse mittels eines Komparators (11) verglichen wird.

11. Verfahren nach einem der Ansprüche 6 bis 10,
**dadurch gekennzeichnet, daß**
die zweiten Daten von dem Speicherbus (4) an den Systembus (1) übertragen werden, falls die spekulative zweite Adresse mit der gültigen zweiten Adresse übereinstimmt.
